# EUROPEAN PATENT APPLICATION

(11) **EP 3 624 442 A1**
(43) Date of publication of application: **18.03.2020**
(21) Application number: 19196919.5
(22) Date of filing: 12.09.2019
(51) Int. Cl.: H04N 7/14

(54) **ROBOT AND METHOD FOR OPERATING THE SAME**

(30) Priority: 14.09.2018 KR 20180110502
(71) Applicant: LG ELECTRONICS INC., Yeongdeungpo-Gu Seoul 07336 (KR)
(72) Inventor: Yongkyoung, Shin, 06772 Seoul (KR); Moon, Yoonji, 06772 Seoul (KR)
(74) Representative: Vossius & Partner Patentanwälte Rechtsanwälte mbB

(57) **Abstract**

A robot and an operation method may provide emotion-based services by recognizing emotion information of a video call counterpart based on data received during a video call, and may automatically generate a character expressing emotion of a video call counterpart, by generating an avatar character by mapping recognized emotion information to face information of the video call counterpart.

## Description

### BACKGROUND

### 1. Field

Embodiments may relate to a robot and an operation method thereof, and more particularly, to a robot that can recognize user emotion and provide a service based on emotion, and an operation method thereof.

### 2. Background

Robots have been developed for industrial use and have been part of factory automation. As the application field of robots has further expanded, medical robots, aerospace robots, and/or the like have been developed, and household robots that can be used in ordinary homes have been manufactured.

As use of robots has been increased, there is a growing demand for robots that can provide various information, fun, and services while understanding and communicating with users beyond performing simple functions.

Interesting and unusual emoticons, and characters may be increasingly used in social network services, text messages, video calls, and/or the like. Additionally, beyond the use of pre-manufactured characters, people create and use their own emoticons and avatars to represent themselves.

For example, a user may create and use a unique character using his/her face, and/or the like. U.S. Patent Application Publication No. 2018/089880A1 (hereafter Document 1) may disclose that facial characteristics of a photographed user may be identified, and avatar data corresponding to the identified characteristics may be generated and transmitted.

Additionally, U.S. Patent Application Publication No. 2015/381534A1 (hereafter Document 2) may disclose that a self-portrait which can represent user's feeling may be selected in a set of self-portraits when sending an electronic message, and may be transmitted as a file.

However, these documents may replace emoticons and characters to be transmitted by a user with a unique character (avatar, self-portrait), and there is a limitation in expanding the usage field.

Additionally, a specific file selected according to intention of the user may be transmitted, which is different from recognition of the real feeling of the user, and the character can not be utilized in other services based on emotion of the user.

### BRIEF DESCRIPTION OF THE DRAWINGS

Arrangements and embodiments may be described in detail with reference to the following drawings in which like reference numerals refer to like elements and wherein:
FIG. 1 is a block diagram of a robot system that includes a robot according to an embodiment of the present invention;
FIG. 2 is a front view showing an outer shape of a robot according to an embodiment of the present invention;
FIG. 3 is an example of an internal block diagram of a robot according to an embodiment of the present invention;
FIG. 4 is an example of an internal block diagram of a server according to an embodiment of the present invention;
FIG. 5 is an example of an internal block diagram of an emotion recognizer according to an embodiment of the present invention;
FIG. 6 is a diagram for explaining emotion recognition according to an embodiment of the present invention;
FIGs. 7 to 10 are diagrams for explaining an expression of a character according to an embodiment of the present invention;
FIG. 11 is a flowchart illustrating an operation method of a robot according to an example embodiment of the present invention;
FIG. 12 is a flowchart illustrating an operation method of a robot according to an example embodiment of the present invention;
FIG. 13 is a diagram for explaining emotion expression of a robot according to an example embodiment of the present invention;
FIGs. 14 to 16 are diagrams for explaining a video call using a robot according to an example embodiment of the present invention;
FIG. 17 is a flowchart illustrating an operation method of a robot according to an example embodiment of the present invention; and
FIGs. 18 to 21 are flowcharts illustrating an operation method of a robot system according to an example embodiment of the present invention.

### DETAILED DESCRIPTION

Exemplary embodiments of the present invention may be described with reference to the accompanying drawings in detail. The same reference numbers may be used throughout the drawings to refer to the same or like parts. Detailed descriptions of well-known functions and structures incorporated herein may be omitted to avoid obscuring the subject matter of the present invention. Reference will now be made in detail to the preferred embodiments of the present invention, examples of which are illustrated in the accompanying drawings. The suffixes "module" and "unit" in elements used in description below are given only in consideration of ease in preparation of the specification and do not have specific meanings or functions. Therefore, the suffixes "module" and "unit" may be used interchangeably.

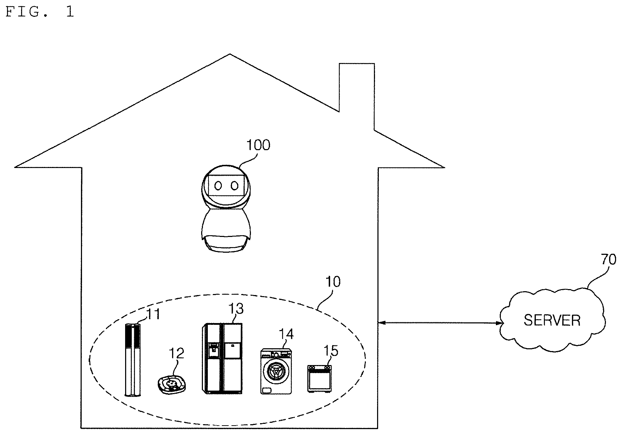

FIG. 1 is a block diagram of a robot system that includes a robot according to an embodiment of the present invention.

Referring to FIG. 1, the robot system may include at least one robot 100, and a home appliance 10 that has a communication module to communicate with other apparatuses, the robot 100, a server 70, and/or the like, or to be connected to a network.

For example, the home appliance 10 may include an air conditioner 11 having a communication module, a robot cleaner 12, a refrigerator 13, a washing machine 14, a cooking appliance 15, and/or the like.

The communication module included in the home appliance 10 may be a wi-fi communication module, but embodiments are not limited to the communication method.

Alternatively, the home appliance 10 may include other types of communication modules or a plurality of communication modules. For example, the home appliance 10 may include an NFC module, a zigbee communication module, a Bluetooth communication module, and/or the like.

The home appliance 10 can be connected to a server 70 through the wi-fi communication module or the like, and can support smart functions such as remote monitoring, remote control, and/or the like.

The robot system may include a portable terminal such as a smart phone, a tablet PC, and/or the like.

The user may check information on the home appliance 10 in a robot system or control the home appliance 10 through the portable terminal.

It may be inconvenient for a user to use the portable terminal even all the time even when the user desires to control the home appliance 10 or check certain information in the home.

For example, it may be more efficient to have a means to control the home appliance 10 in other ways when the user does not know a current location of the portable terminal or when the portable terminal is in another place.

The robot 100 may receive a user's speech input (or audio input) and thus control the home appliance 10 directly or control the home appliance 10 via the server 70.

Accordingly, the user may control the home appliance 10 without operating any other apparatus excluding the robot 100 disposed in the room, living room, or the like.

The robot system may include a plurality of Internet of Things (IoT) apparatuses. Accordingly, the robot system may include the home appliance 10, the robot 100, and the Internet of Things (loT) apparatuses.

The robot system is not limited to a communication method constituting a network.

For example, the home appliance 10, the robot 100, and the Internet of Things (loT) apparatuses may be communicatively connected through a wired/wireless router.

Additionally, the apparatuses in the robot system may be configured in a mesh topology that is individually communicatively connected.

The home appliance 10 in the robot system may communicate with the server 70 or the robot 100 via a wired/wireless router.

Further, the home appliance 10 in the robot system may communicate with the server 70 or the robot 100 by Ethernet.

The robot system may include a network apparatus such as a gateway. Alternatively, at least one of the robots 100 provided in the home may be configured to include the gateway function.

The home appliances 10 included in the robot system may be network-connected directly between apparatuses or via the gateway.

The home appliance 10 may be network-connected to be able to communicate with the server 70 directly or via the gateway.

The gateway may communicate with the server 70 or the mobile terminal 50 by Ethernet.

Additionally, the gateway may communicate with the server 70 or the robot 100 via the wired/wireless router.

The home appliance 10 may transmit apparatus operation state information, setting value information, and/or the like to the server 70 and/or the gateway.

The user may check information related to the home appliance 10 in the robot system or control the home appliance 10 through the portable terminal or the robot 100.

The server 70 and/or the gateway may transmit a signal for controlling the home appliances 10 to each apparatus in response to a user command input through the robot 100 or a specific event occurred in the home appliance 10 in the robot system.

The gateway may include output means such as a display, an sound output unit, and/or the like.

The display and the sound output unit (or sound output device) may output image and audio stored in the gateway or based on a received signal. For example, a music file stored in the gateway may be played and outputted through the sound output unit.

The display and the sound output unit may output the image and audio information related to the operation of the gateway.

The server 70 may store and manage information transmitted from the home appliance 10, the robot 100, and other apparatuses. The server 70 may be a server operated by a manufacturer of the home appliance or a company entrusted by the manufacturer.

Information related to the home appliance 10 may be transmitted to the robot 100, and the robot 100 may display the information related to the home appliance 10.

The home appliance 10 may receive information or receive command from the robot 100. The home appliance 10 may transmit various information to the server 70, and the server 70 may transmit part or all of the information received from the home appliance 10 to the robot 100.

The server 70 may transmit information itself received from the home appliance 10 or may process and transmit the received information to the robot 100.

FIG. 1 illustrates an example of a single server 70, but embodiments are not limited thereto, and the system according to the present invention may operate in association with two or more servers.

For example, the server 70 may include a first server for speech recognition and processing, and a second server may provide a home appliance related service such as a home appliance control.

According to an embodiment, the first server and the second server may be configured by distributing information and functions to a plurality of servers, or may be constituted by a single integrated server.

For example, the first server for speech recognition and processing may be composed of a speech recognition server for recognizing words included in a speech signal and a natural language processing server for recognizing the meaning of a sentence including words included in the speech signal.

Alternatively, the server 70 may include a server for emotion recognition and processing, and a server for providing a home appliance related service, such as a home appliance control. The server for emotion recognition and processing may be configured by distributing information and functions to a plurality of servers, or may be constituted by a single integrated server.

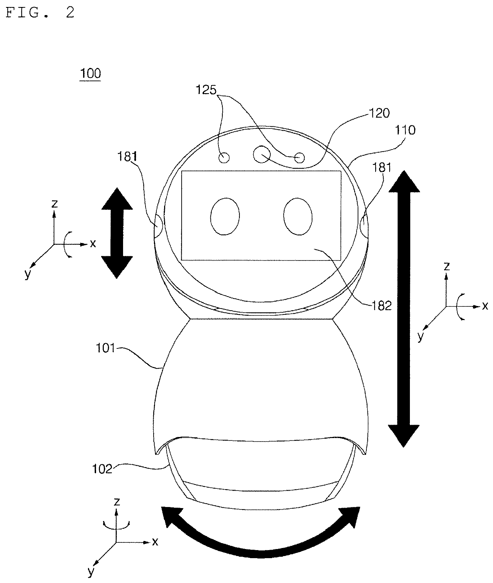

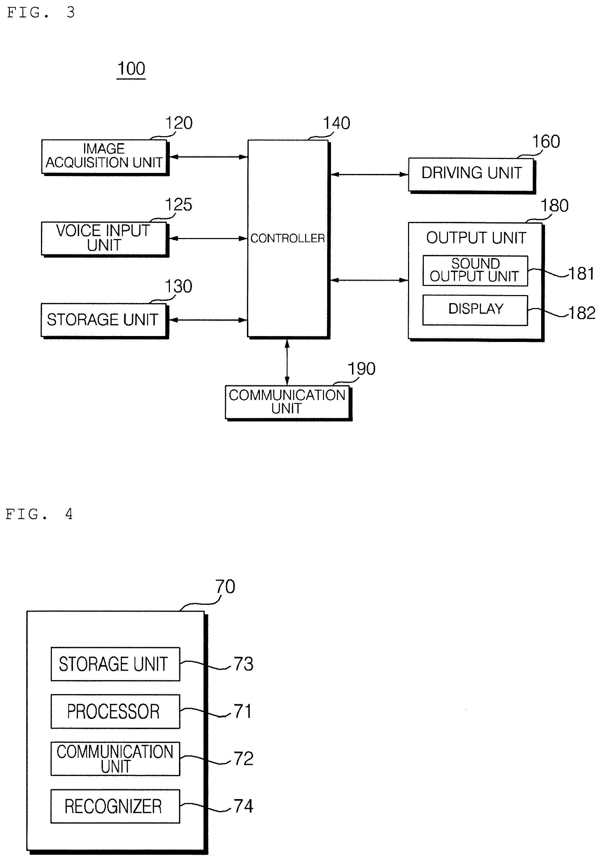

FIG. 2 is a front view showing an outer shape of a robot according to an embodiment of the present invention. FIG. 3 is an example of an internal block diagram of a robot according to an embodiment of the present invention.

Referring to FIGs. 2 and 3, the robot 100 includes a main body that forms an outer shape and houses various components therein.

The main body includes a body 101 forming a space in which various components constituting the robot 100 are accommodated, and a support 102 that is disposed in the lower side of the body 101 and supports the body 101).

The robot 100 may include a head 110 disposed in the upper side of the main body. A display 182 for displaying an image may be disposed on the front surface of the head 110.

In this disclosure, the front direction means the +y axis direction, the up and down direction means the z axis direction, and the left and right direction means the x axis direction.

The head 110 may rotate within a certain angle range about the x-axis.

Accordingly, when viewed from the front, the head 110 can perform a nodding operation that moves in an up and down direction in a similar manner as a person nods his or her head in the up and down direction. For example, the head 110 may perform an original position return operation one or more times after rotating within a certain range in a similar manner as a person nods his/her head in the up and down direction.

At least a part of the front surface on which the display 182 corresponding to the face of the person in the head 100 is disposed may be configured to be nodded.

Accordingly, in the present disclosure, an embodiment may allow the entire head 110 to move in the up and down direction. However, unless specifically described, the vertically nodding operation of the head 110 may be replaced with a nodding operation in the up and down direction of at least a part of the front surface on which the display 182 is disposed.

The body 101 may be configured to be rotatable in the left-right direction. That is, the body 101 may be configured to rotate 360 degrees about the z-axis.

The body 101 also may be configured to be rotatable within a certain angle range about the x-axis, so that it can move as if it nods in the up and down direction. In this example, as the body 101 rotates in the up and down direction, the head 110 may also rotate about the axis in which the body 101 rotates.

Accordingly, the operation of nodding the head 110 in the up and down direction may include both the example where the head 110 itself rotates in the up and down direction when viewed from the front based on a certain axis, and the example where when the head 110 connected to the body 101 rotates and is nodded together with the body 101 as the body 101 is nodded in the up and down direction.

The robot 100 may include a power supply unit (or power supply device) which is connected to an outlet in a home and supplies power to the robot 100.

The robot 100 may include a power supply unit provided with a rechargeable battery to supply power to the robot 100. Depending on an embodiment, a power supply unit may include a wireless power receiving unit for wirelessly charging the battery.

The robot 100 may include an image acquisition unit 120 (or image acquisition device) that can photograph a certain range around the main body or at least the front surface of the main body.

The image acquisition unit 120 may photograph surroundings of the main body, the external environment, and/or the like, and may include a camera module. The camera module may include a digital camera. The digital camera may include an image sensor (e.g., a CMOS image sensor) configured to include at least one optical lens, and a plurality of photodiodes (e.g., pixel) that form an image by light that passed through the optical lens, and a digital signal processor (DSP) that forms an image based on a signal outputted from the photodiodes. The digital signal processor may generate a moving image composed of still images as well as still image.

Several cameras may be installed for each part of the robot for photographing efficiency. The image acquisition unit 120 may include a front camera provided in the front surface of the head 110 to acquire an image of the front of the main body. However, the number, disposition, type, and photographing range of the cameras provided in the image acquisition unit 120 may not be limited thereto.

The image acquisition unit 120 may photograph the front direction of the robot 100, and may photograph an image for user recognition.

The image photographed and acquired by the image acquisition unit 120 may be stored in a storage unit 130 (or storage).

The robot 100 may include a voice input unit 125 for receiving a speech input of a user. The voice input unit may also be called a speech input unit or a voice/speech input device.

The voice input unit 125 may include a processor for converting an analog speech into digital data, or may be connected to the processor to convert a speech signal inputted by a user into data to be recognized by the server 70 or a controller 140 (FIG. 3).

The voice input unit 125 may include a plurality of microphones to enhance accuracy of reception of user speech input, and to determine the position of the user.

For example, the voice input unit 125 may include at least two microphones.

The plurality of microphones (MICs) may be disposed at different positions, and may acquire an external audio signal including a speech signal to process the audio signal as an electrical signal.

At least two microphones, which are an input device, may be used to estimate the direction of a sound source that generated sound and a user, and the resolution (angle) of the direction detection becomes higher as the distance between the microphones is physically farther apart.

Depending on the embodiment, two microphones may be disposed in the head 110.

The position of the user on a three-dimensional space can be determined by further including two microphones in the rear surface of the head 110.

Referring to FIG. 3, the robot 100 may include the controller 140 for controlling the overall operation, the storage unit 130 (or storage device) for storing various data, and a communication unit 190 (or communication device) for transmitting and receiving data with other apparatuses such as the server 70.

The robot 100 may include a driving unit 160 (or driving device) that rotates the body 101 and the head 110. The driving unit 160 may include a plurality of driving motors for rotating and/or moving the body 101 and the head 110.

The controller 140 controls overall operation of the robot 100 by controlling the image acquisition unit 120, the driving unit 160, the display 182, and/or the like, which constitute the robot 100.

The storage unit 130 may record various types of information required for controlling the robot 100, and may include a volatile or nonvolatile recording medium. The recording medium stores data that can be read by a microprocessor, and may include a hard disk drive (HDD), a solid state disk (SSD), a silicon disk drive (SDD), a ROM, a RAM, a CD-ROM, a Magnetic tape, a floppy disk, an optical data storage device, and/or the like.

The controller 140 may transmit an operation state of the robot 100, user input, and/or the like to the server 70, and/or the like through the communication unit 190.

The communication unit 190 may include at least one communication module so that the robot 100 is connected to the Internet or a certain network.

The communication unit 190 may be connected to the communication module provided in the home appliance 10 and process data transmission/reception between the robot 100 and the home appliance 10.

The storage unit 130 may store data for speech recognition, and the controller 140 may process the speech input signal of the user received through the voice input unit 125 and perform a speech recognition process.

Since various known speech recognition algorithms can be used for the speech recognition process, a detailed description of the speech recognition process may be omitted in this disclosure.

The controller 140 may control the robot 100 to perform a certain operation based on a speech recognition result.

For example, when a command included in the speech signal is a command for controlling operation of a certain home appliance, the controller 140 may control to transmit a control signal based on the command included in the speech signal to a control target home appliance.

When the command included in the speech signal is a command for controlling operation of a certain home appliance, the controller 140 may control the body 101 of the robot to rotate in the direction toward the control target home appliance.

The speech recognition process may be performed in the server 70 without being performed in the robot 100.

The controller 140 may control the communication unit 190 so that the user input speech signal is transmitted to the server 70.

Alternatively, a speech recognition may be performed by the robot 100, and a high-level speech recognition (such as natural language processing) may be performed by the server 70.

For example, when a keyword speech input including a preset keyword is received, the robot may switch from a standby state to an operating state. In this example, the robot 100 may perform only the speech recognition process up to the input of the keyword speech, and the speech recognition for the subsequent user speech input may be performed through the server 70.

Depending on an embodiment, the controller 140 may compare the user image acquired through the image acquisition unit 120 with information stored in the storage unit 130 in order to determine whether the user is a registered user.

The controller 140 may control to perform a specific operation only for the speech input of the registered user.

The controller 140 may control rotation of the body 101 and/or the head 110, based on user image information acquired through the image acquisition unit 120.

Accordingly, interaction and communication between the user and the robot 100 can be easily performed.

The robot 100 may include an output unit 180 (or output device) to display certain information as an image or to output certain information as a sound.

The output unit 180 may include a display 182 for displaying, as an image, information corresponding to a user's command input, a processing result corresponding to the user's command input, an operation mode, an operation state, an error state, and/or the like.

The display 182 may be disposed at the front surface of the head 110 as described above.

The display 182 may be a touch screen having a mutual layer structure with a touch pad. The display 182 may be used as an input device for inputting information by a user's touch as well as an output device.

The output unit 180 may include a sound output unit 181 (or sound output device) for outputting an audio signal. The sound output unit 181 may output, as sound, a notification message (such as a warning sound, an operation mode, an operation state, and an error state, and/or the like), information corresponding to a command input by a user, a processing result corresponding to a command input by the user, and/or the like. The sound output unit 181 may convert an electric signal from the controller 140 into an audio signal and output the signal. For this purpose, a speaker, and/or the like may be provided.

Referring to FIG. 2, the sound output unit 181 may be disposed in the left and right sides of the head 110, and may output certain information as sound.

The outer shape and structure of the robot shown in FIG. 2 are illustrative, and embodiments are not limited thereto. For example, positions and numbers of the voice input unit 125, the image acquisition unit 120, and the sound output unit 181 may vary according to design specifications. Further, the rotation direction and the angle of each component may also vary. For example, unlike the rotation direction of the robot 100 shown in FIG. 2, the entire robot 100 may be inclined or shaken in a specific direction.

The robot 100 may access to the Internet and a computer by support of a wired or wireless Internet function.

The robot 100 can perform speech and video call functions, and such a call function may be performed by using an Internet network, a mobile communication network, or the like according to Speech over Internet Protocol (VoIP).

The controller 140 may control the display 182 to display the image of a video call counterpart and an image of the user in a video call according to the setting of the user, and control the sound output unit 181 to output a speech (or audio) based on the received speech signal of the video call counterpart.

A robot system according to an example embodiment may include two or more robots that perform a video call.

FIG. 4 is an example of an internal block diagram of a server according to an embodiment of the present invention.

Referring to FIG. 4, the server 70 may include a communication unit 72 (or communication device), a storage unit 73 (or storage device), a recognizer 74, and a processor 71.

The processor 71 may control overall operation of the server 70.

The server 70 may be a server operated by manufacturer of a home appliance such as the robot 100 or a server operated by a service provider, and/or may be a kind of a cloud server.

The communication unit 72 may receive various data such as state information, operation information, handling information, and/or the like from a portable terminal, a home appliance such as the robot 100, a gateway, and/or the like.

The communication unit 72 can transmit data corresponding to the received various information to the portable appliance, the home appliance such as the robot 100, the gateway, and/or the like.

The communication unit 72 may include one or more communication modules such as an Internet module, a mobile communication module, and/or the like.

The storage unit 73 may store the received information, and may have data for generating corresponding result information.

The storage unit 73 may store data used for machine learning, result data, and/or the like.

The recognizer 74 may serve as a learning device of the home appliance such as the robot 100.

The recognizer 74 may include an artificial neural network, e.g., a deep neural network (DNN) such as a Convolutional Neural Network (CNN), a Recurrent Neural Network (RNN), a Deep Belief Network (DBN), and/or the like, and may learn the deep neural network (DNN).

After learning according to the setting, the processor 71 may control the artificial neural network structure of the home appliance such that the robot 100 is to be updated to the learned artificial neural network structure.

The recognizer 74 may receive input data for recognition, recognize attributes of object, space, and emotion contained in the input data, and output the result. The communication unit 72 may transmit the recognition result to the robot 100.

The recognizer 74 may analyze and learn usage-related data of the robot 100, recognize the usage pattern, the usage environment, and/or the like, and output the result. The communication unit 72 may transmit the recognition result to the robot 100.

Accordingly, the home appliance products such as the robot 100 may receive the recognition result from the server 70, and operate by using the received recognition result.

The server 70 may receive the speech input signal uttered by the user and perform speech recognition. The server 70 may include a speech recognizer and may include an artificial neural network that is learned to perform speech recognition on the speech recognizer input data and output a speech recognition result.

The server 70 may include a speech recognition server for speech recognition. The speech recognition server may include a plurality of servers that share and perform a certain process during speech recognition. For example, the speech recognition server may include an automatic speech recognition (ASR) server for receiving speech data and converting the received speech data into text data, and a natural language processing (NLP) server for receiving the text data from the automatic speech recognition server and analyzing the received text data to determine a speech command. The speech recognition server may include a text to speech (TTS) server for converting the text speech recognition result outputted by the natural language processing server into speech data and transmitting the speech data to another server or the home appliance.

The server 70 may perform emotion recognition on the input data. The server 70 may include an emotion recognizer, and the emotion recognizer may include an artificial neural network that is learned to output emotion recognition result by performing emotion recognition for the input data.

The server 70 may include an emotion recognition server for emotion recognition. That is, at least one of the servers 70 may be an emotion recognition server having an emotion recognizer for performing emotion recognition.

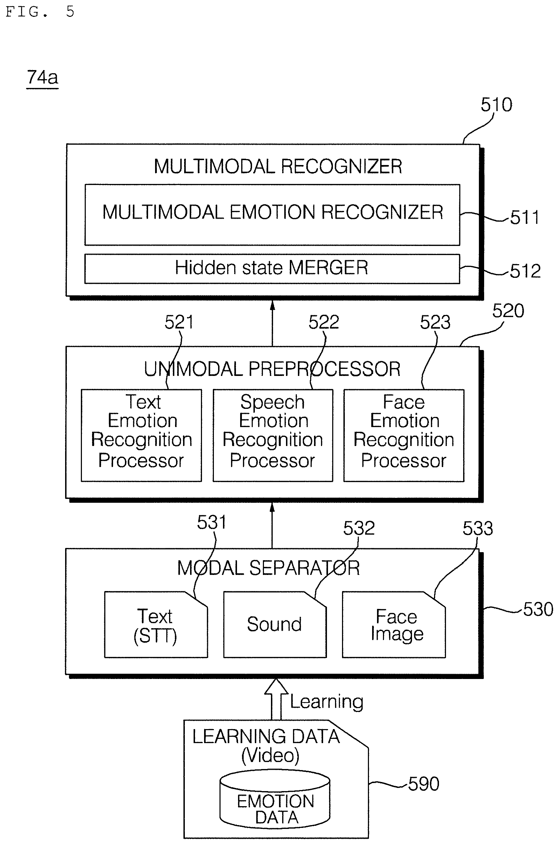

FIG. 5 is an example of an internal block diagram of an emotion recognizer according to an embodiment of the present invention.

Referring to FIG. 5, an emotion recognizer 74a provided in the robot 100 or the server 70 may perform deep learning by using emotion data as input data 590 (or learning data).

The emotion recognizer 74a may include a unimodal preprocessor 520 including a plurality of recognizers (or recognition processors) for each modal 521, 522, and 523 that are learned to recognize emotion information of the user included in the unimodal input data, and a multimodal recognizer 510 that is learned to merge the output data of the plurality of recognizers for each modal 521, 522, and 523 and recognize the emotion information of the user included in the merged data.

Emotion data is emotion information data having information on the emotion of the user, and may include emotion information, such as image, speech, and bio-signal data, which can be used for emotion recognition. The input data 590 may be image data including a user's face, and more preferably, the learning data 590 may include audio data including user's speech.

Emotion is the ability to feel about stimulus, and is the nature of the mind that accepts sensory stimulation or impression. In emotion engineering, emotion is defined as a complex emotion such as pleasantness and discomfort as a high level of psychological experience inside the human body due to changes in the environment or physical stimulation from the outside.

Emotion may mean feelings of pleasantness, discomfort or the like that occur with respect to stimulation, and emotion may be recognized as any one of N representative emotional states. These N representative emotional states may be named emotion class.

For example, the emotion recognizer 74a may recognize six representative emotion classes such as surprise, happiness, sadness, displeasure, anger, and fear, and may output one of the representative emotion classes as a result of the emotion recognition, and/or may output a probability value for each of six representative emotion classes.

Alternatively, the emotion recognizer 74a may include a neutrality emotion class indicating a default emotion state in which six emotions do not occur in addition to the emotion classes such as surprise, happiness, sadness, displeasure, anger, and fear, as an emotion that can be recognized and outputted by the emotion recognizer 74a.

The emotion recognizer 74a may output, as an emotion recognition result, any one of the emotion classes selected from surprise, happiness, sadness, displeasure, anger, fear, and neutrality, or may output, as an emotion recognition result, a probability value for each emotion class such as surprise x%, happiness x%, sadness x%, displeasure x%, anger x%, fear x%, and neutrality x%.

When the emotion of the user is recognized by the artificial intelligence model in which learned deep learning of the emotion is to be recognized, the result is outputted as a tagging value of the data used in learning the deep learning.

In a real environment, there may be many example where the user's emotion can not be finally outputted as a single emotion. For example, although a user may express joy emotion in words, an unpleasant emotion may be expressed in a facial expression. People may often output different emotion for each modal such as speech, image, text, and/or the like.

Accordingly, when the emotion of the user is recognized and outputted as a final single emotion value, or when different emotions, contradictory emotions, similar emotions, and/or the like of each voice, image, and text are ignored, the emotion different from the feeling that is actually felt by the user may be recognized.

In order to recognize and manage each emotion based on all the information exposed to the outside of the user, the emotion recognizer 74a can recognize the emotion for each unimodal of speech, image, and text, and may have a structure capable of recognizing emotion even in a multimodal.

The emotion recognizer 74a may recognize, for each unimodal, the emotion of the user inputted at a specific time point, and may simultaneously recognize the emotion complexly as a multimodal.

The plurality of recognizers (or recognition processors) for each modal 521, 522, and 523 may recognize and process a single type unimodal input data which are inputted respectively, and may be also named a unimodal recognizer.

The emotion recognizer 74a may generate the plurality of unimodal input data by separating the input data 590 for each unimodal. A modal separator 530 may separate the input data 590 into a plurality of unimodal input data.

The plurality of unimodal input data may include image unimodal input data, speech unimodal input data, and text unimodal input data separated from the moving image data including the user.

For example, the input data 590 may be moving image data photographed by the user, and the moving image data may include image data in which the user's face or the like is photographed and audio data including a speech uttered by a user.

The modal separator 530 may separate the content of the audio data included in the input data 590 into a text unimodal input data 531 that is acquired by converting the audio data into text data and sound unimodal input data 532 of the audio data such as a speech tone, magnitude, height, etc.

The text unimodal input data may be data acquired by converting a speech separated from the moving image data into text. The sound unimodal input data 532 may be a sound source file of audio data itself, or a file whose preprocessing has been completed, such as removing noise from a sound source file.

The modal separator 530 may separate image unimodal input data 533 that includes one or more facial image data from the image data contained in the input data 590.

The separated unimodal input data 531, 532, and 533 may be inputted to the unimodal preprocessor 520 including a plurality of modal recognizers for each modal 521, 522, and 523 that are learned to recognize emotion information of a user based on each unimodal input data 531, 532, and 533.

For example, the text unimodal input data 531 may be inputted to the text emotion recognizer 521 (or text emotion recognition processor) which performs deep learning by using text as learning data.

The sound unimodal input data 532 may be inputted, while being used as the speech learning data, to a speech emotion recognizer 522 (or speech emotion recognition processor) that performs deep learning.

The image unimodal input data 533 (including one or more face image data) may be inputted, while being used as the image learning data, to a face emotion recognizer 523 (or face emotion recognition processor) that performs deep learning.

The text emotion recognizer 521 may recognize emotion of the user by recognizing vocabularies, sentence structures, and/or the like included in the sound to text (STT) data converted into text. For example, as more words related to happiness are used or a word expressing a strong degree of happiness is recognized, the probability value for the happiness emotion class may be recognized to be higher than the probability value for other emotion class. Alternatively, the text emotion recognizer 521 may directly output happiness which is the emotion class corresponding to the recognized text as the emotion recognition result.

The text emotion recognizer 521 may also output a text feature point vector along with an emotion recognition result.

The speech emotion recognizer 522 may extract the feature points of the input speech data. The speech feature points may include tone, volume, waveform, etc. of speech. The speech emotion recognizer 522 may determine the emotion of the user by detecting a tone of speech or the like.

The speech emotion recognizer 522 may also output the emotion recognition result and the detected speech feature point vectors.

The face emotion recognizer 523 may recognize the facial expression of the user by detecting the facial area of the user in the input image data and recognizing facial expression landmark point information which is the feature points constituting the facial expression. The face emotion recognizer 523 may output the emotion class corresponding to the recognized facial expression or the probability value for each emotion class, and also output the facial feature point (facial expression landmark point) vector.

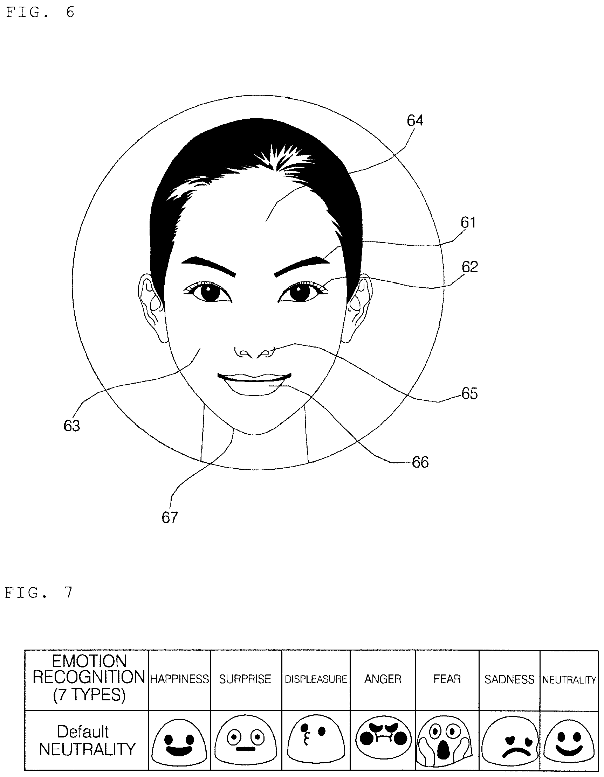

FIG. 6 is a diagram for explaining emotion recognition according to an embodiment of the present invention, and illustrates components of a facial expression.

Referring to FIG. 6, a facial expression landmark point may be an eyebrow 61, an eye 62, a cheek 63, a forehead 64, a nose 65, a mouth 66, a jaw 67, and/or the like.

The landmark points (61-67) in FIG. 6 are exemplary and the types and numbers may be changed.

For example, if only a small number of facial expression landmark points having a strong characteristic such as the eyebrow 61, the eye 62, and the mouth 66 may be used, or a facial expression landmark point having a large degree of change may be used when a specific expression is created for each user.

The facial emotion recognizer 523 (or face emotion recognition processor) may recognize the facial expression based on position and shape of the facial expression landmark points (61-67).

The facial emotion recognizer 523 may include the artificial neural network that has achieved deep learning with image data containing at least a part of the facial expression landmark points (61-67), thereby recognizing the facial expression of the user.

For example, when the user opens the eyes 62 and opens the mouth 66 widely, the facial emotion recognizer 523 may determine the emotion of the user as happiness among the emotion classes or may output the emotion recognition result having the highest probability of happiness.

The plurality of recognizers (or plurality of recognition processors) for each modal may include an artificial neural network corresponding to input characteristics of the unimodal input data that are inputted respectively. A multimodal emotion recognizer 511 may include an artificial neural network corresponding to characteristics of the input data.

For example, the facial emotion recognizer 523 for performing image-based learning and recognition may include a Convolutional Neural Network (CNN), the other emotion recognizers 521 and 522 include a deep-network neural network (DNN), and the multimodal emotion recognizer 511 may include an artificial neural network of a Recurrent Neural Network (RNN).

The emotion recognizer for each modal 521, 522, and 523 may recognize emotion information included in the unimodal input data 531, 532, and 533 that are inputted respectively, and output emotion recognition results. For example, the emotion recognizer for each modal 521, 522, and 523 may output the emotion class having the highest probability among a certain number of preset emotion classes as the emotion recognition result, or output the probability for emotion class as emotion recognition results.

The emotion recognizer for each modal 521, 522, and 523 may learn and recognize text, voice, and image in each deep learning structure, and derive intermediate vector value composed of feature point vector for each unimodal.

The multimodal recognizer 510 may perform multimodal deep learning with the intermediate vector value of each voice, image, and text.

As described above, since the input of the multimodal recognizer 510 is generated based on the output of the emotion recognizer for each modal 521, 522, and 523, the emotion recognizer for each modal 521, 522 and 523 may operate as a kind of preprocessor.

The emotion recognizer 74a may use a total of four deep learning models including the deep learning model of three emotion recognizers for each modal 521, 522, 523 and the deep learning model of one multimodal recognizer 510.

The multimodal recognizer 510 may include a merger 512 (or hidden state merger) for combining the feature point vectors outputted from the plurality of recognizers for each modal 521, 522, and 523, and a multimodal emotion recognizer 511 that is learned to recognize emotion information of the user included in the output data of the merger 512.

The merger 512 may synchronize the output data of the plurality of recognizers for each modal 521, 522, and 523, and may combine (vector concatenation) the feature point vectors to output to the multimodal emotion recognizer 511.

The multimodal emotion recognizer 511 may recognize the emotion information of the user from the input data and output the emotion recognition result.

For example, the multimodal emotion recognizer 511 may output the emotion class having the highest probability among a certain number of preset emotion classes as the emotion recognition result, and/or may output a probability value for each emotion class as the emotion recognition result.

Accordingly, the emotion recognizer 74a may output a plurality of unimodal emotion recognition results and one multimodal emotion recognition result.

The emotion recognizer 74a may output the plurality of unimodal emotion recognition results and one multimodal emotion recognition result as a level (probability) for each emotion class.

For example, the emotion recognizer 74a may output the probability value for emotional classes of surprise, happiness, neutral, sadness, displeasure, anger, and fear, and there may be a higher probability of recognized emotional class as the probability value is higher. The sum of the probability values of seven emotion classes may be 100%.

The emotion recognizer 74a may output the complex emotion recognition result including the respective emotion recognition results 521, 522, and 523 of the plurality of recognizers for each modal and the emotion recognition result of the multimodal recognizer 511.

Accordingly, the robot 100 may provide emotional exchange user experience (UX) based on emotion recognition results of three unimodals and one multimodal.

According to the setting, the emotion recognizer 74a may output the recognition result occupying a majority of the complex emotion recognition results and the recognition result having the highest probability value as the final recognition result. Alternatively, the controller 140 (of the robot 100) that received a plurality of emotion recognition results may determine the final recognition result according to a certain criterion.

The emotion recognizer 74a may recognize and manage the emotion of each of the voice (voice tone, etc.), the image (facial expression, etc.), and the text (the content of talk, etc.) as a level. Accordingly, the emotional exchange user experience (UX) may be handled differently for each modal.

Emotion recognition result for each unimodal (voice, image, text) and multimodal emotion recognition result may be simultaneously outputted based on a single time point. Emotion can be recognized complexly with voice, image, and text inputted from a single time point, so that contradictory emotion can be recognized for each unimodal from the multi-modal emotion to determine user's emotional tendency. Accordingly, even if a negative input is received from some modal, the emotional exchange user experience (UX) corresponding to a positive input of the user's real emotional state can be provided by recognizing the overall emotion.

The robot 100 may be equipped with the emotion recognizer 74a or communicate with the server 70 having the emotion recognizer 74a so as to determine the emotion for unimodal of only the user.

The emotional pattern of only the user can be analyzed and emotion recognition for each modal can be utilized for emotional care (healing).

Emotion methods may have difficulty in analyzing emotion by mapping the emotions into a single emotion in the example of contradictory emotions having different recognition results for each modal of the input data.

However, according to example embodiments of the present invention, various real-life situations may be processed through a plurality of inputs and outputs.

In order to complement an input recognizer having low performance, the present invention may constitute a recognizer structure in which a plurality of recognizers 511, 521, 522, and 523 complement each other by a plurality of inputs and outputs in a fusion manner.

The emotion recognizer 74a may separate the voice into sound and meaning, and make a total of three inputs including image, voice (sound), and STT from image and voice inputs.

In order to achieve optimum performance for each of the three inputs, the emotion recognizer 74a may have a different artificial neural network model for each input, such as Convolutional Neural Network (CNN) and Long Short-Term Memory (LSTM). For example, the image-based recognizer 523 may have a CNN structure, and the multimodal emotion recognizer 511 may have a long-short-term memory (LSTM) structure. Thus, a neural network customized for each input characteristic can be configured.

The output of the unimodal recognizer 521, 522, 523 for each input may be the probability value for seven emotion classes and the vector value of feature points expressing the emotion well.

The multimodal recognizer 510 may not simply calculate the emotion value for the three inputs by a statistical method, but may combine the vector value of the feature points that express the emotion well through the entire joint layer and the LSTM so as to help improve performance and to cover various cases in real life in such a manner that another recognizer helps the difficult problem that one recognizer has.

For example, even when only a voice is heard from a place where face recognition is difficult, in the emotion recognizer 74a, the voice based recognizer 521, 522 and the multimodal emotion recognizer 511 may recognize the emotion of the user.

Since the emotion recognizer 74a can recognize the complex emotion state of the user by merging the recognition results of the image, voice, and character data with the multimodal recognition result, the emotion recognition can be achieved for various situations in real life.

FIGs. 7 to 10 are diagrams for explaining an expression of a character according to an embodiment of the present invention.

The robot 100 according to an example embodiment of the present invention may generate an avatar character expressing emotion of a certain user based on an emotion recognition result recognized by itself or an emotion recognition result received from another device.

According to the embodiment, the robot 100 may generate an avatar character by synthesizing a facial expression landmark point image generated in correspondence with recognized emotion information on the face image data of the user as augmented reality. For example, the frowning eye, eyebrow, and forehead may cover the eye, eyebrow, and forehead of the user's face image in their own positions with augmented reality. Thus, an avatar character expressing the user's displeasure emotion may be generated.

Alternatively, the robot 100 may first generate the animation character based on face information of the user. Such an animation character may also be generated by reflecting the detected facial expression landmark points of the user. For example, in the example of a user having a large nose, animation character having a large nose may be created. Additionally, the robot 100 may change the facial expression landmark points of the generated animation character to correspond to the recognized emotion information, thereby generating an avatar character expressing the specific emotion of the user.

Alternatively, the robot 100 may generate the avatar character by changing facial expression landmark points of the preset animation character to correspond to the recognized emotion information. Since modification can be achieved only by reflecting the user characteristic for recognizing only the facial expression landmark points in the previously generated animation character, the avatar character can be generated quickly and easily.

For example, the avatar character can be generated by selecting one of the basic animation characters that is stored in the storage unit 130 (of the robot 100) or can be received through the communication unit 190, and reflecting the detected facial expression landmark points of the user in the selected character.

By changing the facial expression landmark points of the generated animation character so as to correspond to the recognized emotion information, the avatar character expressing the specific emotion of the user can be generated.

FIGs. 7 to 10 illustrate examples in which seven types of emotion classes are expressed using a preset animation character and a small number of facial expression landmark points.

Referring to FIG. 7, default expressions corresponding to the emotion classes of happiness, surprise, displeasure, anger, fear, sadness (or grief), and neutrality may be stored.

If the recognized emotion level of the user is larger, the expression degree of specific emotion can be greatly changed in the default expression. For example, if the level of happiness is large, the degree of opening of the mouth, which is the landmark point included in the expression of the happiness emotion class, can be changed more widely.

The avatar character may be composed of only a specific landmark point, and/or may highlight a specific landmark point as if drawing a caricature.

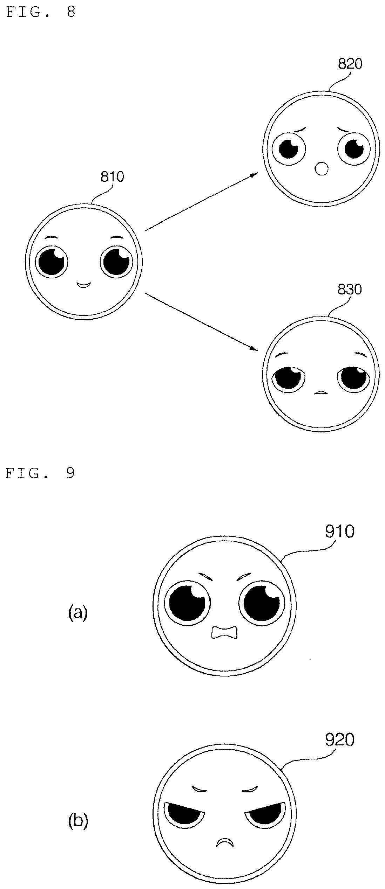

FIGs. 8 to 10 illustrate avatar characters composed of eyebrow, eye, and mouth only, for ease of discussion.

Referring to FIG. 8, when the emotion of the user is recognized as neutrality (or neutral), the avatar character may be generated as a smiling neutral expression 810. The neutral expression 810 may be set to a default expression that is used when the robot 100 does not recognize a particular emotion.

When the emotion of the user is recognized as a surprise, the avatar character may be generated showing a surprise expression 820 of raising eyebrows and opening the mouth.

When the emotion of the user is recognized as a displeasure, the avatar character may be generated showing a displeasure expression 830 of dropping the corner of his mouth and frowning.

Even though it is recognized as the same emotion class, the avatar character can be generated differently. For example, the avatar character may be generated differently depending on size, position of the detected landmark pointer of the user, and the user's emotion expression type. The avatar character can be generated differently depending on the level of detected emotion.

FIG. 9 illustrates facial expressions of an avatar character expressing the emotion class of anger. Referring to FIGs. 9(a) and 9(b), a first anger expression 910 and a second anger expression 920 may express shapes of eyes and mouth differently.

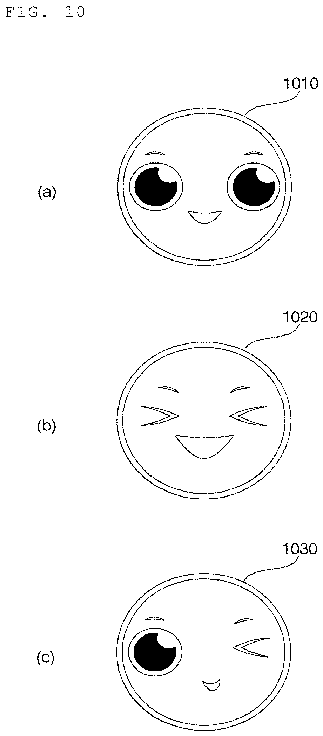

FIG. 10 illustrates facial expressions of an avatar character expressing the emotion class of happiness. Referring to FIGS. 10(a), 10(b), and 10(c), a first happiness expression 1010, a second happiness expression 1020, and a third happiness expression 1030 may express shapes of the eyes and the mouth differently.

As described with reference to FIGs. 7 to 10, the robot 100 may generate an avatar character by mapping recognized emotion information of user to the user's face information.

According to an example embodiment, the avatar character follows the facial feature point (landmarks) ranging from a time point where the user's emotion is recognized up to a time point where the emotion is expressed.

By creating the avatar character by drawing the face feature in the emotion expression process with the character in a fun manner, a fun factor may be provided to the user and the user's desire of expressing his/her individuality may be satisfied.

The user's emotion (facial expression) may be generated as arbitrary contents and used later.

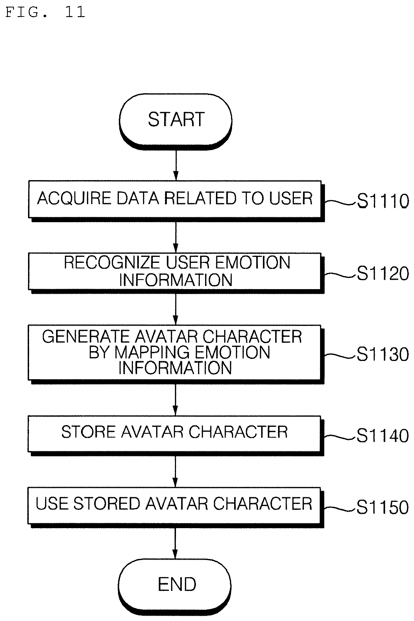

FIG. 11 is a flowchart illustrating an operation method of a robot according to an example embodiment of the present invention. Other embodiments and operations may also be provided.

Referring to FIG. 11, the robot 100 may acquire data related to a user (S1110).

The data related to the user may be moving image data that photographed a user or real-time moving image data that is photographing the user. The robot 100 may use both the stored data and the data inputted in real time.

The data related to the user may include image data (including the face of the user) and voice data (uttered by the user). The image data including the face of the user may be acquired through a camera of the image acquisition unit 120, and the voice data uttered by the user may be acquired through a microphone of the voice input unit 125.

The emotion recognizer 74a may recognize the emotion information of the user based on the data related to the user (S1120).

The emotion information may be any one of the plurality of emotion classes described above, or may be based on a probability value for each of the plurality of emotion classes. That is, the emotion recognition result according to recognition of emotion information may be an emotion class selected from among emotion classes and/or may include a probability value for each emotion class.

The robot 100 may include the emotion recognizer 74a that includes an artificial neural network that is learned to recognize emotion information based on image data and voice data, and to recognize emotion information of the user when the data related to the user is inputted.

Further, as described with reference to FIG. 5, the emotion recognizer 74a may be learned to recognize emotion information by a plurality of unimodal inputs and multimodal input based on the plurality of unimodal inputs, thereby outputting the emotion recognition result for each of the plurality of unimodal inputs and the complex emotion recognition result including the emotion recognition result for the multi-modal input.

The server 70 may include the emotion recognizer 74a including a learned artificial neural network which is inputted to recognize emotion information based on image data and voice data. The server 70 may be an emotion recognition server that includes the emotion recognizer 74a to perform emotion recognition.

As described with reference to FIG. 5, the server 70 including the emotion recognizer 74a may include a plurality of artificial neural networks learned by the unimodal input, and may include an artificial neural network learned by the multi-modal input based on the plurality of unimodal inputs.

In an example, the operation S1120 of recognizing the emotion information of the user may include transmitting data related to the user to the emotion recognition server 70 by the robot 100, and receiving, at the robot 100, the emotion recognition result from the emotion recognition server 70.

The robot 100 may generate an avatar character by mapping emotion information of the recognized user to the face information of the user included in the data related to the user (S1130).

The avatar character may express individuality of the user by a character reflecting at least one of the features extracted from the face information of the user. For example, the avatar character may be generated by reflecting at least one of the facial expression landmark point extracted from the face information of the user. If the facial expression landmark point of a specific user is an eye, various emotions can be expressed by keeping the eye as a feature point. Alternatively, if eyes and mouth are considered as landmark point, eyes and mouth to a plurality of sample characters, or to characterize only eyes and mouth shapes like a caricature.

The robot 100 may store the generated avatar character in association with the user's information (S1140), and may freely use the stored avatar character (S1150).

For example, one of the stored avatar characters of the user may be displayed on the display 182.

According to user command or setting, the generated avatar character may be used as a default screen displayed on the display 182 (of the robot 100).

For example, the avatar character 810 of the neutral expression of FIG. 8 may be used as a default screen of the robot 100. That is, one of the generated avatar characters may be used as the facial expression of the robot 100. Accordingly, the user's sense of resistance to using the robot can be reduced, and it may help the user to feel more friendly.

At least one of the user's stored avatar characters may be used in a specific situation where a specific user uses the robot 100 to request, command, and/or transfer information to others.

According to an embodiment, when transmitting certain data to another device, the robot 100 may transmit the avatar character or the recognized emotion information together with the certain data.

The robot 100 may transmit the avatar character together with certain data to intuitively display the user himself or herself, and to transmit the current specific emotion to another user using another device.

Since the transmission of the avatar character does not take into consideration the deterioration of image quality and hardware performance of the reception-side device, the robot 100 may transmit the recognized emotion information together with the certain data. The reception-side robot 100 may generate and display an avatar character by reflecting received emotion information according to hardware characteristics. Accordingly, the emotion, facial expression, behavior, etc. of the user may be imitated without affecting or being affected by physical characteristics of the reception-side robot 100.

According to an example embodiment, the robot 100 may acquire image data and voice data of the user for a certain time. Accordingly, the emotion recognizer 74a can recognize emotion information of the user for the certain time based on the user's image data and voice data.

For example, the emotion recognizer 74a may perform emotion recognition successively for input data for a certain time, rather than performing emotion recognition once and ending emotion recognition.

The controller 140 (of the robot 100) may map the emotion information of the user to the image data of the user, synchronize the voice data of the user, and generate a moving image of the avatar character.

Alternatively, the emotion recognizer 74a may perform a plurality of emotion recognitions in a certain cycle from the input data for a certain time period, and output a plurality of emotion recognition results simultaneously or sequentially.

The controller 140 (of the robot 100) may adjust the degree of change of the facial expression landmark points of the avatar character in correspondence with the recognized emotion information of the user.

According to the setting, the controller 140 may enhance the emotion expression by adjusting the degree of change of the facial expression landmark points of the avatar character more greatly, and/or may alleviate the emotion expression by adjusting the degree of change of the facial expression landmark points of the avatar character to be less.

According to an example embodiment, the emotion expression may be changed to perform a video call.

For example, during the video call, emotions of the caller and the receiver may be directly expressed. A participant of a video call who does not like to express emotions directly may use an avatar character that alleviated emotion expression.

A user who accurately recognizes or empathizes the emotion of a video call counterpart during a video call may use an avatar character that enhanced emotion expression. Accordingly, emotions in conversation contents may be intuitively recognized and positive interaction may be induced.

The emotion of the counterpart may be recognized in real time during the video call, so that the violent voice (such as abuse) can be set to be refined and changed.

The robot 100 may generate an avatar character expressing emotion of a certain user based on the emotion recognition result recognized by itself and/or the emotion recognition result received from the server 70.

According to the embodiment, the robot 100 may generate an avatar character by synthesizing a facial expression landmark point image generated in correspondence with recognized emotion information on the face image data of the user, with augmented reality.

Alternatively, the robot 100 may first generate the animation character based on the face information of the user. Such an animation character may also be generated by reflecting the detected landmark points of the user. The robot 100 may change the facial expression landmark points of the generated animation character to correspond to the recognized emotion information, thereby generating an avatar character expressing a specific emotion of the user.

Alternatively, the robot 100 may generate the avatar character by changing the facial expression landmark points of the preset animation character to correspond to the recognized emotion information.

For example, it may be generated by selecting one of the basic animation characters that are stored in the storage unit 130 (of the robot 100) or can be received through the communication unit 190, and reflecting the detected the facial expression landmark points of the user in the selected character.

By changing the facial expression landmark points of the generated animation character to correspond to the recognized emotion information, an avatar character expressing a specific emotion of the user may be generated.

The robot 100 may detect the movement of the user, determine a responding motion in response to the movement of the user, and then perform the responding motion.

For example, the controller 140 may detect an operation of rotating a user' head, and/or the like from the image acquired through the image acquisition unit 120. The controller 140 may control the robot 100 to rotate the head in the same direction in response to the rotation of the user's head.

When a user's arm lifting operation is detected, the controller 140 may determine a responding motion in response to the arm lifting operation. In the example of a human body type robot having an arm, the controller 140 may control the robot to raise its arm in response to the movement of the user. In the example of the robot 100 having no arm, the robot may perform a replacement operation such as shaking the head or body in response to the movement of the user.

The controller 140 may determine a responding motion corresponding to movement of the user in consideration of hardware of the robot 100, and control to perform the determined responding motion.

The robot 100 may detect the movement of the user, determine a responding motion by mapping the emotion information of the user to the movement of the user, and then perform the responding motion. For example, the motion can be more reflected or less reflected according to the emotion of the user.

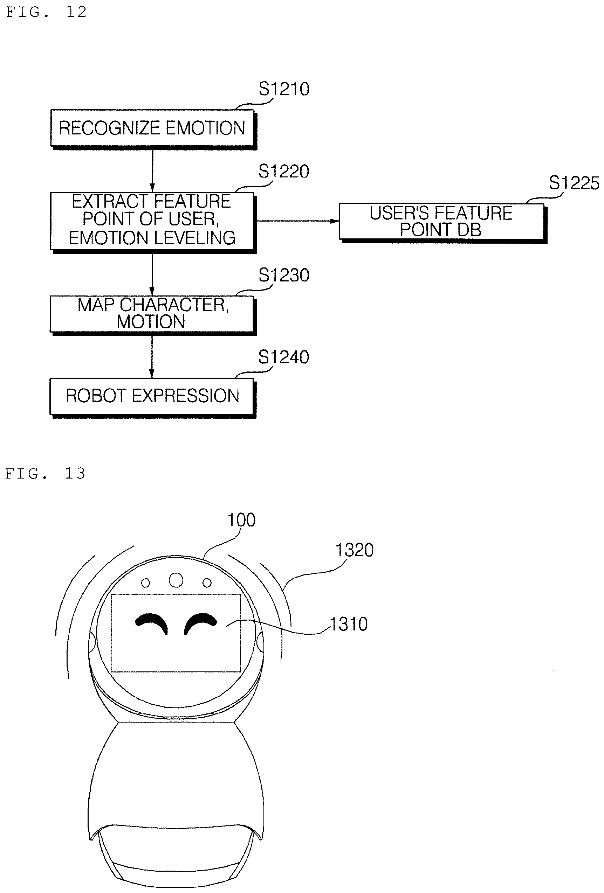

FIG. 12 is a flowchart illustrating an operation method of a robot according to an example embodiment of the present invention, and shows emotional exchange user experience (UX) in a video call. FIG. 13 is a diagram for explaining emotion expression of a robot according to an example embodiment of the present invention. Other embodiments, operations and configurations may also be provided.

The emotion recognizer 74a provided in the robot 100 or the server 70 may recognize the emotion of the user and/or the video call counterpart (S1210).

For example, the emotion recognition result may be leveled and outputted as a numerical value such as probability value of seven types of representative emotion classes (including surprise, happiness, sadness (or grief), displeasure, anger, fear, and neutrality). The emotion recognition result can be leveled and outputted as a class of strong/mid/weak classified in correspondence with the probability value rather than an accurate probability value.

The robot 100 may extract a feature point of the user, and map the recognized emotion recognition result to the feature point (S1220). The feature point of the user may be a landmark point of the user's face, and the feature point may already be databased (DB) in the learning process (S1225). The newly recognized feature point of the user may be added to the database and used as learning data.

The robot 100 may combine the leveled emotion of the user and the feature point, and map the combination to a corresponding character and motion (S1230).

For example, the robot 100 may generate at least part of faces of the avatar character expressing a specific emotion, and/or determine a responding motion by combining the leveled emotion of the user and the feature point.

The robot 100 may express emotion of the video call participant based on the generated avatar character and the determined responding motion (S1240). This may be called robot expression.

The robot 100 may display the landmark point of the avatar characters generated on the face of the video call participant in a superimposed manner, or display the entire generated avatar character (S1240).

The robot 100 may perform the determined responding motion (S1240).

FIG. 13 illustrates that the robot 100 expresses a pleasure emotion by an eyebrow shape 1310, which is one of the facial expression landmark points, and a motion 1320 of shaking the body (or the robot).

According to an embodiment, a video call may be performed through a robot, and emotional call service can be provided by combining emotional recognition/expression technology with a video call.

The robot may recognize emotion such as happiness, sadness, anger, surprise, fear, neutrality, and displeasure of at least one of the video call participants, map the recognized emotion to the character, and display this during a call.

According to an example embodiment, emotion recognition may be performed in real time during a video call, and emotion may be transmitted to the counterpart, thereby helping people to communicate with each other.

An emotional call service may be provided through a motion function, which can not be performed by a portable terminal or the like, that can be performed only by a robot. A fun factor and a lock-in effect may be expected by a robot that imitates the motion of a participant during a video call.

An avatar replacing a specific gesture and facial expression of the user through emotion recognition may be provided. Depending on a user setting or a device used for video call, a video call can be achieved without a speaker's face.

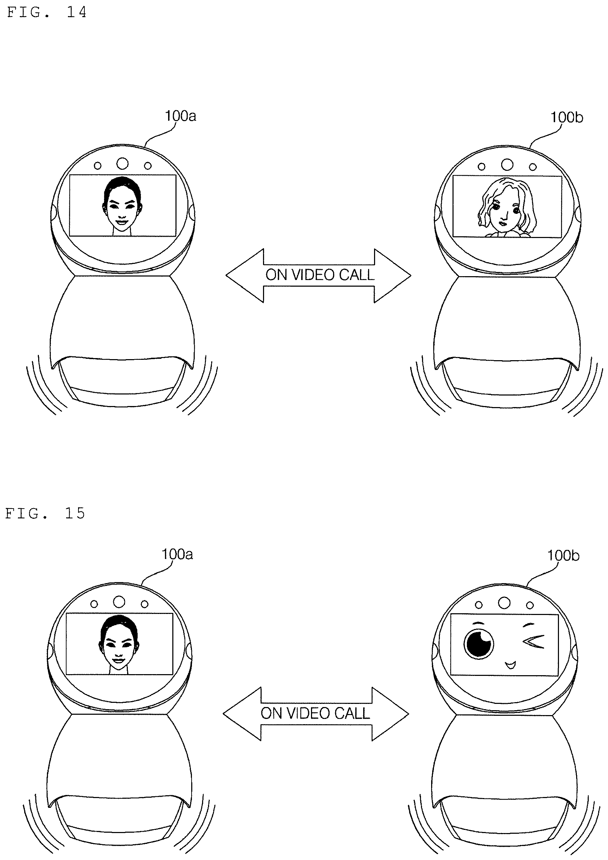

FIGs. 14 to 16 are diagrams for explaining a video call using a robot according to an example embodiment of the present invention. Other embodiments and configurations may also be provided.

FIG. 14 shows that two persons use a video call by using a first robot 100a and a second robot 100b.

As shown in FIG. 14, a P2P video call between the first robot 100a and the second robot 100b can be performed. Additionally, (dissimilarly to FIG. 14), a P2P video call between the robot 100 and a portable terminal may also be performed.

During a video call using the robot 100, faces of the sender and the receiver may be hidden to communicate with each other only through characters, and the characters can be identified by following the emotion and the feature point of only the sender and the receiver.

The method of identifying the emotion and the feature point of a specific user may be achieved by characterizing motion, voice, and facial movements.

FIG. 15 shows an example in which the user of the second robot 100b performs video call using a character that expresses emotion of the user of the first robot 100a, the user of the second robot 100b may recognize the emotion of the video call counterpart based on the video call data received from the first robot 100a, and may perform a video call while watching the character expressing the recognized emotion of counterpart.

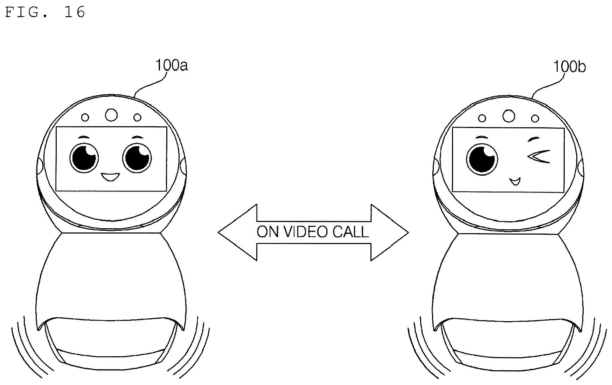

FIG. 16 shows an example in which both the first robot 100a and the second robot 100b may perform a video call by using a character.

During the video call, the emotion of the user can be determined by recognizing the emotion of the user and displaying various characters mapped to the recognition result value to be overlaid on the face of the speaker or by replacing the face of the speaker with the character, so that the emotion of the counterpart can be easily determined, and a fun factor and lock-in effects can be expected.

During video call, a gesture of the user may be recognized and a corresponding gesture may be mapped to the motion of the robot so that the user can intuitively recognize the emotion of the counterpart through the motion of the robot.

In at least one embodiment, for a user who has a sense of resistance to expose the face and surrounding environment, the user's face and surrounding environment information may be recognized, and a character and a background image may be generated and used based on the recognized information. Accordingly, a user who has a sense of discomfort (or resistance) to the video call because of the exposure of the surrounding environment may also use the video call.

The robot 100 may understand the emotion information (feature point) of the user, and reproduce the emotion information when changing to the avatar.

The robot 100 may store a specific habit or emotion of the user, and when it is replaced with an avatar during the video call, the robot 100 can serve as an agent to perform a simple call. Even when the user is absent, the robot 100 that accurately follows the characteristics of the user can serve as an agent. For example, when a video call is received the absence of the user, the reception-side robot 100 can perform a simple call of guiding the absence of user by using the character based on the face and emotion of a main user.

According to an example embodiment, the recognized emotion information may be rendered on the character in real time.

For example, if a facial expression landmark point of a specific user is an eye, various emotions can be expressed by continuously setting the eye as a feature point. Alternately, if eyes and mouth are considered as landmark point(s), eye and mouth may be mapped to a plurality of sample characters, and/or only eye and mouth shapes can be characterized like a caricature.

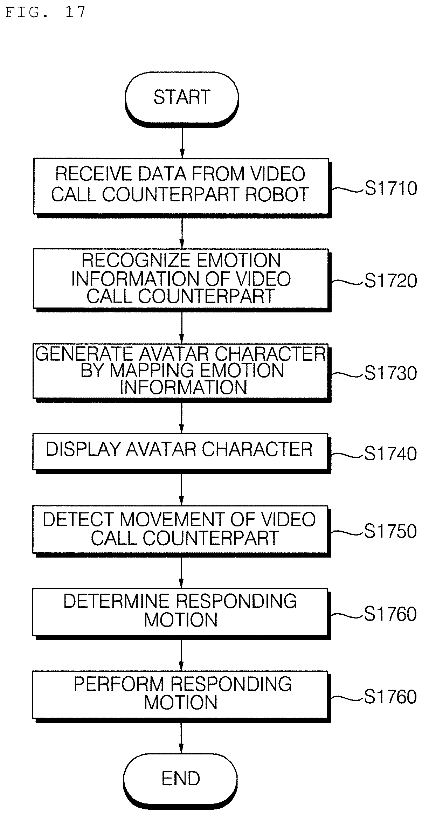

FIG. 17 is a flowchart illustrating an operation method of a robot according to an example embodiment of the present invention, and illustrates an operation method of a robot that recognizes the emotion of a video call counterpart while performing a video call. Other embodiments and operations may also be provided.

Referring to FIG. 17, the robot 100 may receive video and voice data from the video call counterpart robot (S1710), and recognize emotion information of the video call counterpart based on the data received from the video call counterpart robot (S1720).

The emotion information may be any one of the plurality of emotion classes described above, or may be based on a probability value for each of the plurality of emotion classes. That is, the emotion recognition result according to the recognition of the emotion information may be the emotion class selected from among the emotion classes. For example, the recognized emotion information may be any one of the happiness, surprise, displeasure, anger, fear, sadness, and neutrality.

Alternatively, the emotion recognition result according to the recognition of emotion information may include a probability value for each emotion class. For example, a probability value for each emotion class (such as surprise x%, happiness x%, sadness x%, displeasure x%, anger x%, fear x%, and neutrality x%) may be outputted as emotion recognition result.

The controller 140 (of the robot 100) may map the recognized emotion information of the video call counterpart to the face information of the video call counterpart included in the data received from the video call counterpart robot, and generate the avatar character (S1730).

The controller 140 (of the robot 100) may control to display the generated avatar character on the display 182 (S1740). Accordingly, the user of the robot 100 may intuitively recognize the emotion of the counterpart while watching the avatar character expressing emotion of the video call counterpart.

When a voice or a video call is performed with the counterpart through the robot 100, the feature point (or individuality) of the counterpart can be expressed by allowing the robot to recognize and follow the personal habit of the counterpart or unique characteristics of the counterpart.

Accordingly, the user can feel similar emotions in comparison with a human counterpart without a sense of resistance to the robot 100, and may help immerse the user in the counterpart when talking with the counterpart.

As described with reference to FIGs. 1 to 16, the controller 140 (of the robot 100) may adjust the degree of change of the facial expression landmark points of the avatar character, in response to the recognized emotion information of the video call counterpart.

According to the setting, the controller 140 may enhance the emotion expression by adjusting the degree of change of the facial expression landmark points of the avatar character more greatly, and/or may alleviate the emotion expression by adjusting the degree of change of the facial expression landmark points of the avatar character more greatly, and/or may alleviate the emotion expression by adjusting the degree of change of the facial expression landmark points of the avatar character to be less.

The controller 140 may generate the avatar character by changing the facial expression landmark points of the preset animation character to correspond to the recognized emotion information.

The controller 140 may generate the avatar character by changing the facial expression landmark points of the animation character generated based on the face information of the video call counterpart to correspond to the recognized emotion information.

The controller 140 may generate the avatar character by synthesizing the facial expression landmark point image generated in correspondence with the recognized emotion information on the face image of the video call counterpart with augmented reality.

The generated avatar character may be stored in the storage unit 130, and the stored avatar character may be used again.

The controller 140 may store the generated avatar character in association with the information of the video call counterpart. For example, when the counterpart requests a video call again, any one of the call request guide of the counterpart and the avatar character of the counterpart may be displayed on the display 182.

The controller 140 (of the robot 100) may detect movement of the video call counterpart based on the received image data (S1750), and determine a responding motion by mapping the recognized emotion information of the video call counterpart (S1760).

The controller 140 may control the robot 100 to perform the determined responding motion (S1770).

For example, during a video call, when the face of the counterpart is recognized from the received image, and the movement of the face is detected, the controller 140 may recognize the direction of movement of the face of the counterpart, and control the robot 100 to rotate in a corresponding direction.

The controller 140 may control the robot 100 to rotate in the same direction when the direction of movement of the face of the counterpart is the up and down direction, and to rotate in the opposite direction according to the image reversal when the direction is the left and right direction.

According to an example embodiment, when the face movement of the video call counterpart is detected, the controller 140 may control the degree of the responding motion in accordance with the face movement direction of the counterpart differently.

For example, the controller 140 may set the rotation angle in accordance with the face movement direction of the counterpart differently, and may control the face movement to rotate by 3 degrees at a time in the up and down directions and to rotate by 10 degrees at a time in the left and right directions.

If there is no movement of the face of the video call counterpart in the image for three seconds, the controller 140 may control to keep the rotated state as it is when the face is recognized, and return to the original position when the face is not recognized, so that the movement of the video call counterpart can be reflected.

According to the embodiment, the controller 140 may map the emotion information of the recognized video call counterpart to the voice data of the video call counterpart, and generate the converted voice data. According to the control of the controller 140, the sound output unit 181 may utter the converted voice data.

The controller 140 may change at least one of the tone and the magnitude of the voice data of the video call counterpart based on the emotion information of the recognized video call counterpart. For example, when the emotion information of the recognized video call counterpart is happiness, the tone of the voice data of the video call counterpart may be increased.

When the recognized emotion information of the video call counterpart is displeasure or when abuse is contained in the recognized utterance contents of the video call counterpart, the controller 140 may control the sound output unit 181 to reduce and output the magnitude of the voice data of the video call counterpart.

According to the setting, the controller 140 may enhance the emotion expression by adjusting the degree of change of the voice data more greatly, or may alleviate the emotion expression by adjusting the degree of change of the voice data to be less.

Accordingly, the user may feel emotion of the video call counterpart more greatly and feel sympathy, and/or may prevent emotion from transmitting more than necessary.

In at least one embodiment, for a user who has a sense of resistance to expose the surrounding environment, a background image may be generated, and the generated avatar character may be displayed on the generated background image. Accordingly, the background of the current user may be prevented from being exposed to the video call counterpart.

The emotion recognition (S1720) of the video call counterpart may be performed by the robot 100 itself.

The robot 100 may include the emoticon recognizer 74a that contains an artificial neural network that is learned to recognize emotion information based on image data and voice data, and recognizes the emotion information of the video call counterpart when data received from the video call counterpart robot is inputted.

The emotion recognizer 74a may be learned to recognize emotion information by a plurality of unimodal inputs and a multimodal input based on the plurality of unimodal inputs, and output a result of the complex emotion recognition including the emotion recognition result for each of the plurality of unimodal inputs and the emotion recognition result for the multimodal input.

The emotion recognition (S1720) of the video call counterpart may be performed in the emotion recognition server 70 having the emotion recognizer 74a.

The operation of recognizing the emotion information of the video call counterpart (S1720) may include transmitting data received from the video call counterpart robot to the emotion recognition server 70 including a learned artificial neural network which is inputted to recognize emotion information based on image data and voice data and receiving the emotion recognition result from the emotion recognition server 70.

As described with reference to FIG. 5, the emotion recognition server 70 may include a plurality of artificial neural networks 521, 522, and 523 learned by the unimodal input. The emotion recognition server 70 may include an artificial neural network 511 learned by the multimodal input based on the plurality of unimodal inputs. The neural networks 511, 521, 522, 523 included in the emotion recognition server 70 may be an artificial neural network suitable for respective input data.

In at least one embodiment, the robot 100 may map emotion information to the voice outputted from the sound output unit 181. For example, the robot 100 may recognize emotion of the counterpart in real time, and may refine and change the radical voice such as abuse and transmit. Alternatively, it may emphasize the interjection within voice to increase the volume and output.

According to an example embodiment, the emotion can be expressed in the interaction with the user or in the video call with the counterpart, by using the emotion value of the multimodal recognized from the voice, image, and text of the user. The recognized emotion may be expressed as positive/negative/neutrality, and/or may be based on information recognized as a probability value of seven types of emotion classes.

The emotion recognition result of the voice, image, and text and the multimodal emotion recognition result can be used complementarily, so that the emotion recognition accuracy can be further improved.

A user who is characterized by the emotion having incompatible emotional information of voice, image, and text can be determined, and a singular point database may be used for the emotional exchange user experience (UX) of the user and the robot.

According to an example embodiment, leveling may be performed to enhance or weaken the emotion expression by an exaggerated emotion expression or a passive emotion expression, depending on the emotion recognition result value of the user.

The robot 100 may understand the emotion feature point of the user, and reproduce the emotion feature point recognized as the avatar. For example, when a user laughs, user's unique feature point (facial expression in a specific emotion of the speaker), such as one side mouth corner that is always raised when user laughs, may be recognized, and may be mapped to the avatar character.

The robot 100 may store a specific habit or emotion of the user, and perform a call as if the avatar character serves as an agent of the user when it is replaced with an avatar that reflects a user's emotion feature point during a video call.

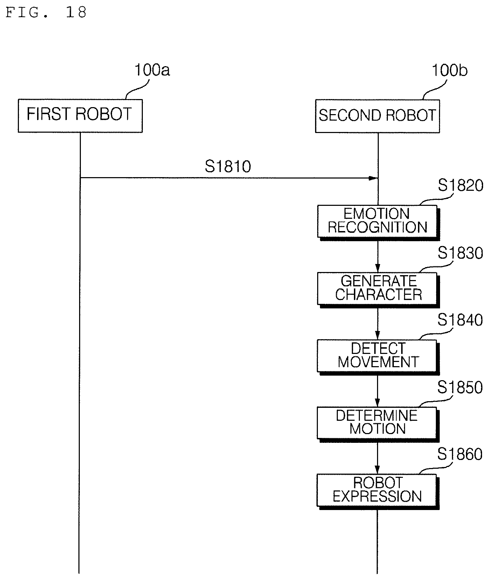

FIGs. 18 to 21 are flowcharts illustrating an operation method of a robot system according to an example embodiment of the present invention. Other embodiments and operations may also be provided.

Referring to FIG. 18, the robot system may include the first robot 100a and the second robot 100b for performing a video call.

The first robot 100a and the second robot 100b may transmit and receive data necessary for a video call while performing a video call (S1810).

For example, the second robot 100b may receive, from the first robot 100a, image data photographed by the user of the first robot 100a, voice data uttered by the user of the first robot 100a, etc. (S1810). After that, the first robot 100a and the second robot 100b may transmit and receive data necessary for video call while continuously performing a video call.

The second robot 100b, which received the image data and the voice data from the first robot 100a, may recognize the emotion of the user of the first robot 100a (i.e., the video call counterpart) based on the received image data and voice data (S1820).

The second robot 100b may be provided with the above mentioned emotion recognizer 74a.

The controller 140 may generate the avatar character of the video call counterpart by mapping the emotion recognition result of the video call counterpart outputted by the emotion recognizer 74a to the face information of the video call counterpart acquired based on the image data photographed by the user of the first robot 100a (S1830).

The controller 140 may detect the movement of the video call counterpart from the image data photographed by the user of the first robot 100a (S1840), and may determine the responding motion that is performed by the second robot 100b in response to the movement of the video call counterpart (S1850).

Thereafter, the second robot 100b may display the generated avatar character under the control of the controller 140, and may express the emotion of the video call counterpart by performing the responding motion (S1860).

Accordingly, the user of the second robot 100b may intuitively recognize the emotion of the video call counterpart from the character displayed by the second robot 100b and the movement of the second robot 100b.

The first robot 100a may recognize the emotion of the user of the second robot 100b in the same manner, display the avatar character based on the recognized emotion recognition result, and perform the responding motion, thereby expressing the emotion of the user of the second robot 100b.

The robots 100a, 100b may usually recognize the emotion of the user as voice, image, and text and store feature point of the user's emotion. Additionally, the avatar may communicate with the counterpart based on the usually stored emotion feature point information of the user.

During a P2P video call using the robots 100a, 100b, user emotion may be mapped to the avatar to perform the emotion avatar. The emotion of the sender or the receiver may be mapped to the avatar in real time, and the feature point of emotion may be more emphasized in the avatar character.

During the video call, the emotion of the speaker may be recognized in real time, and various characters mapped to the recognition result value may be overlaid on the face of the speaker or may replace the speaker, so that the emotion of the counterpart can be easily determined.

During the video call, the gesture of the speaker may be recognized and a corresponding gesture may be mapped to the motion of the robot, so that the user can intuitively recognize the emotion of the counterpart through the motion of the robot, and can expect the fun factor. Embodiments may recognize the multimodal emotion of a user's face, voice, text, etc. from the emotion recognizer 74a, and the robots 100a, 100b may map a specific emotion to the avatar character by using the detected emotion information. Accordingly, a positive interaction may be induced by recognizing the emotion of the conversation contents.

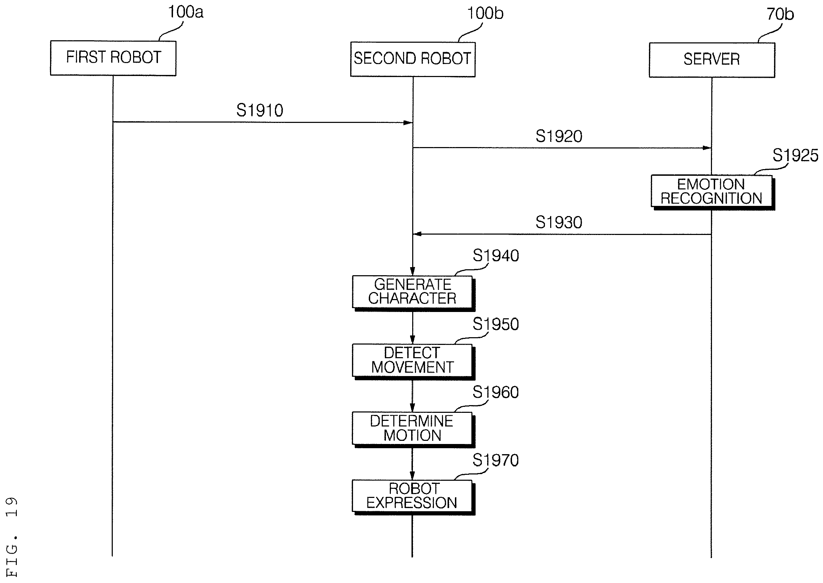

Referring to FIG. 19, the robot system according to an example embodiment of the present invention may include the first robot 100a and the second robot 100b that perform a video call, and one or more emotion recognition servers 70b.

FIG. 19 differs from the embodiment of FIG. 18 in that emotion recognition may be performed in the emotion recognition server 70b connected to the second robot 100b. The emotion recognition server 70b may include the above mentioned emotion recognizer 74a.

The first robot 100a and the second robot 100b may transmit and receive data necessary for video call while performing video call (S1910).

The second robot 100b that received the image data and the voice data from the first robot 100a may transmit the received image data and voice data to the emotion recognition server 70b (S1920).

The emotion recognition server 70b may recognize the emotion of the user of the first robot 100a (i.e., a video call counterpart) based on the received data (S1925), and transmit the emotion recognition result to the second robot 100b (S1930).

Thereafter, similarly, the second robot 100b may generate the avatar character of the video call counterpart by mapping the recognized emotion information to the face information of the video call counterpart (S1940).

If the movement of the video call counterpart is detected from the image data in which user of the first robot 100a is photographed (S1950), the second robot 100b may determine a responding motion to be performed in response to the movement of the video call counterpart (S1960).

The second robot 100b may express the emotion of the video call counterpart by displaying the generated avatar character and performing a responding motion (S1970).

Accordingly, the user of the second robot 100b may intuitively recognize the emotion of the video call counterpart from the character displayed by the second robot 100b and the movement of the second robot 100b.

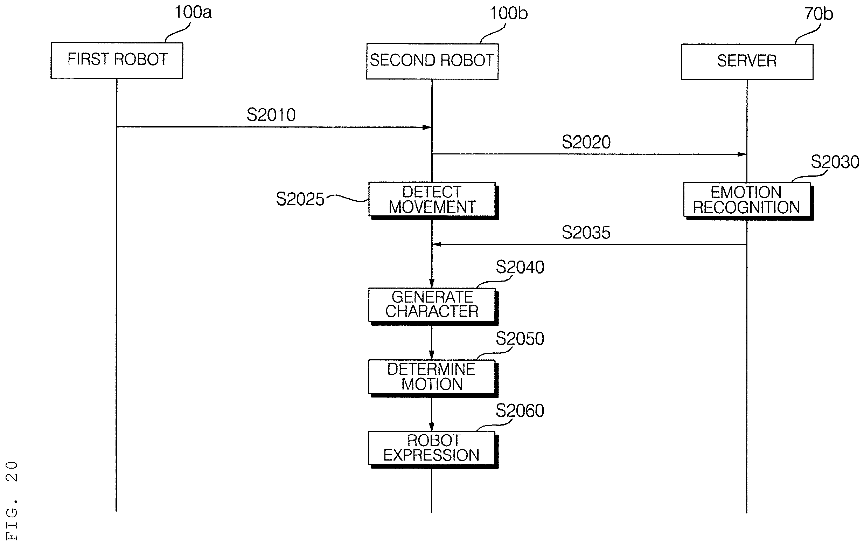

Referring to FIG. 20, the robot system according to an example embodiment may include the first robot 100a and the second robot 100b that perform a video call, and one or more emotion recognition servers 70b.

FIG. 20 differs from the embodiment of FIG. 19 in that movement detection (S2025) of the video call counterpart is performed before reception of the emotion recognition result (S2035).

Referring to FIG. 20, the second robot 100b receives data from the first robot 100a (S2010), and transmits the received data to the emotion recognition server 70b (S2020).

The second robot 100b may detect the movement of the video call counterpart based on the received data (S2025).

The emotion recognition server 70b may perform emotion recognition (S2030), and transmit the result to the second robot 100b (S2035).

When the emotion recognition result is received (S2035), the second robot 100b may generate an avatar character by mapping the emotion recognition result to the user's face information (S2040), and determine the responding motion corresponding to the movement of the video call counterpart (S2050).

The second robot 100b may display the generated avatar character, and perform the responding motion to express the emotion of the video call counterpart (S2060).

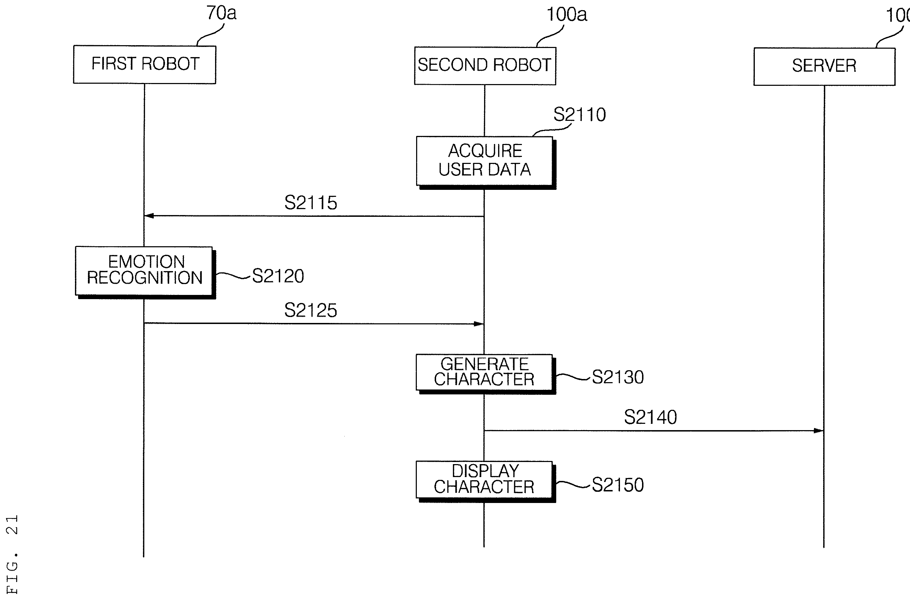

Referring to FIG. 21, the robot system according to an example embodiment may include the first robot 100a and the second robot 100b that perform a video call, and one or more emotion recognition servers 70a.

Referring to FIG. 21, the first robot 100a may acquire user-related data such as data including a user's face, data including a user's utterance voice (S2110).

The first robot 100a may transmit the acquired user-related data to the emotion recognition server 70a (S2115).

The emotion recognition server 70a may perform emotion recognition based on the received data (S2120), and transmit the result to the first robot 100a (S2125).

When the emotion recognition result is received (S2125), the first robot 100a may generate the avatar character by mapping the emotion recognition result to the user's face information (S2130).

The first robot 100a may transmit the recognized emotion information or the generated avatar character to the second robot 100b (i.e., the robot of the video call counterpart) (S2140), and may display the generated avatar character (S2150).

Alternatively, the first robot 100a may display the generated avatar character (S2150), and then transmit the recognized emotion information or the generated avatar character to the second robot 100b (S2140).

The second robot 100b may display the received avatar character according to the setting, or express the emotion of the user of the first robot 100a based on the received emotion information.

According to at least one embodiment, a user's emotion may be recognized, and an emotion-based service may be provided.

According to at least one embodiment, the emotion of the user can be more accurately recognized by using the artificial intelligence learned by a deep learning.

According to at least one embodiment, a character expressing emotion of a user can be automatically generated and utilized, thereby providing the user with fun and ease of use.

According to at least one embodiment, there is an effect of adding emotional factor to communication between the user and the robot and to the communication between the users, by using the character expressing the emotion of the user.

According to at least one embodiment, the emotion of at least one of the video call participants can be recognized and the character can be generated according to the recognized emotion, so that the emotion of the video call participant can be intuitively checked.

According to at least one embodiment, the emotion of the video call counterpart can be transmitted through the robot, so that satisfaction and convenience of the user can be enhanced.

According to at least one embodiment, the robot may recognize the movement of the video call counterpart and perform a corresponding operation, thereby allowing people to use the video call to have more fun and to be convenient.

The method of operating the robot and the robot system according to an example embodiment can be implemented as a code readable by a processor on a recording medium readable by the processor. The processor-readable recording medium includes all kinds of recording apparatuses in which data that can be read by the processor is stored. Examples of the recording medium that can be read by the processor include a ROM, a RAM, a CD-ROM, a magnetic tape, a floppy disk, an optical data storage apparatus, and/or the like, and may also be implemented in the form of a carrier wave such as transmission over the Internet. In addition, the processor-readable recording medium may be distributed over network-connected computer systems so that code readable by the processor in a distributed fashion can be stored and executed.

Embodiments been made in view of the above problems, and may provide a robot that can recognize user emotion and can offer emotion-based services, and a method for operating the same.

Embodiments may provide a robot that can automatically generate and use a character expressing emotion of a user, and a method for operating the same.

Embodiments may provide an emotion recognition method that can more accurately recognize a user's emotion by using artificial intelligence learned by deep learning.

Embodiments may provide a robot that can generate a user's own emotional character by reflecting emotion recognition results to user's face, and a method for operating the same.

Embodiments may provide a robot that can express emotion by using generated emotional characters, and a method for operating the same.

Embodiments may provide a robot that can recognize emotion of at least one of video call participant and generate character according to recognized emotion, and a method for operating the same.

Embodiments may provide a robot that can transmit emotion of a video call counterpart, and a method for operating the same.

Embodiments may provide a robot that provides expectation of various fun factor during a video call, and a method for operating the same.

Embodiments may provide a robot that can recognize the movement of at least one of a video call participant and operate according to the recognized movement, and a method for operating the same.

In order to achieve the above and other objects, a robot and an operation method thereof according to an embodiment of the present invention can provide emotion-based services by recognizing emotion information of a video call counterpart based on data received during a video call.

In order to achieve the above and other objects, a robot and an operation method thereof according to an aspect of the present invention can automatically generate a character expressing emotion of a video call counterpart, by generating an avatar character by mapping recognized emotion information to face information of the video call counterpart.

In order to achieve the above and other objects, a robot and an operation method thereof according to an aspect of the present invention can generate an avatar character by changing facial expression landmark points of a preset animation character to correspond to recognized emotion information.

In order to achieve the above and other objects, a robot and an operation method thereof according to an aspect of the present invention can adjust a degree of change of facial expression landmark points of an avatar character, in response to emotion information of a recognized video call counterpart. According to the setting, the emotion expression can be enhanced by adjusting the degree of change of the facial expression landmark points of the avatar character more greatly, or can be alleviated by adjusting to be less.

In order to achieve the above and other objects, a robot and an operation method thereof according to an aspect of the present invention can display any one of stored avatar characters of the video call counterpart, and use it for video call.

In order to achieve the above and other objects, a robot and an operation method thereof according to an aspect of the present invention can generate an avatar character by changing facial expression landmark points of an animation character generated based on face information of a video call counterpart to correspond to recognized emotion information.

The robot and the operation method thereof according to an aspect of the present invention can generate the avatar character by synthesizing a facial expression landmark point image generated in response to the recognized emotion information on the face image of the video call counterpart with augmented reality.

The robot and the operation method thereof according to an aspect of the present invention can detect movement of the video call counterpart, and perform a responding motion corresponding to the movement of the video call counterpart.

The robot and the operation method thereof according to an aspect of the present invention can generate converted voice data by mapping the recognized emotion information of the video call counterpart to voice data of the video call counterpart and, and utter the converted voice data.

Here, at least one of a tone or a magnitude of voice data of the video call counterpart can be changed, and emotion expression can be enhanced by adjusting degree of change of the voice data more greatly, or alleviating the emotion expression by adjusting be less, according to setting.

In order to achieve the above and other objects, a robot and an operation method thereof according to an aspect of the present invention may be any one of a plurality of emotion classes, or based on a probability value for each of the plurality of emotion classes.

In order to achieve the above and other objects, a robot and an operation method thereof according to an aspect of the present invention can be performed by the robot itself or through an emotion recognition server.

The emotion recognizer is learned to recognize emotion information by a plurality of unimodal inputs and a multimodal input based on the plurality of unimodal inputs, and outputs a complex emotion recognition result including an emotion recognition result for each of the plurality of unimodal inputs and an emotion recognition result for the multimodal input, thereby recognizing the emotion of the video call counterpart more accurately.

In order to achieve the above and other objects, a robot and an operation method thereof according to an aspect of the present invention may include recognizing emotion information of a video call counterpart based on data received from a video call counterpart robot, generating an avatar character by mapping recognized emotion information of a video call counterpart to face information of the video call counterpart included in the data received from the video call counterpart robot by the server, and displaying the generated avatar character by the robot.

In order to achieve the above and other objects, a robot and an operation method thereof according to an aspect of the present invention may include receiving data from a video call counterpart robot by a robot, transmitting the data received from the video call counterpart robot to a server by the robot, and transmitting an emotion recognition result based on the data received from the video call counterpart robot to the robot by the server.

In order to achieve the above and other objects, a robot may include a communication unit configured to transmit and receive data with a video call counterpart robot, a display configured to display a predetermined image based on data received from the video call counterpart robot, an audio output unit configured to output a predetermined sound based on data received from the video call counterpart robot, and a controller configured to recognize emotion information of a video call counterpart based on the data received from the video call counterpart robot, generate an avatar character by mapping the recognized emotion information of the video call counterpart to face information of the video call counterpart included in the data received from the video call counterpart robot, and control the generated avatar character to be displayed on the display.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and/or the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of operating a robot, the method comprising:
recognizing emotion information of a video call counterpart based on data received from a video call counterpart robot;
generating an avatar character by mapping the recognized emotion information of the video call counterpart to face information of the video call counterpart included in the data received from the video call counterpart robot; and
displaying the generated avatar character.

2. The method of claim 1, wherein the generating an avatar character comprises adjusting a degree of change of facial expression landmark points of the avatar character, in response to the recognized emotion information of the video call counterpart.

3. The method of claim 2, wherein the generating an avatar character comprises enhancing emotion expression by adjusting the degree of change of the facial expression landmark points of the avatar character to a higher level, and alleviating the emotion expression by adjusting the degree of change of the facial expression landmark points of the avatar character to a lower level, according to setting.

4. The method of any one of the preceding claims, wherein the generating an avatar character comprises generating the avatar character by changing the facial expression landmark points of a preset animation character to correspond to the recognized emotion information.

5. The method of any one of the preceding claims, wherein the generating an avatar character comprises generating the avatar character by changing the facial expression landmark points of an animation character generated based on the face information of the video call counterpart to correspond to the recognized emotion information.

6. The method of any one of the preceding claims, wherein the generating an avatar character comprises generating the avatar character by synthesizing a facial expression landmark point image generated in response to the recognized emotion information on the face image of the video call counterpart with augmented reality.

7. The method of any one of the preceding claims, further comprising storing the generated avatar character.

8. The method of any one of the preceding claims, further comprising:
detecting movement of the video call counterpart;
determining a responding motion corresponding to the movement of the video call counterpart; and
performing the responding motion.

9. The method of any one of the preceding claims, further comprising:
generating converted voice data by mapping the recognized emotion information of the video call counterpart to voice data of the video call counterpart and; and
uttering by using the converted voice data.

10. The method of claim 9, wherein the generating converted voice data comprises changing at least one of a tone or a magnitude of voice data of the video call counterpart, based on the recognized emotion information of the video call counterpart.

11. The method of claim 9 or 10, wherein the generating converted voice data comprises enhancing emotion expression by adjusting degree of change of the voice data to a higher level, and alleviating the emotion expression by adjusting the degree of change of the voice data to a lower level, according to setting.

12. The method of any one of the preceding claims, further comprising generating a background image,
wherein the displaying the generated avatar character comprises displaying the generated avatar character on the generated background image.

13. The method of any one of the preceding claims, wherein the robot comprises an emotion recognizer which contains an artificial neural network that is learned to recognize emotion information based on image data and voice data, and is configured to recognize emotion information of the video call counterpart, when the data received from the video call counterpart robot is inputted.

14. The method of any one of the preceding claims, wherein the recognizing emotion information of the video call counterpart comprises:
transmitting the data received from the video call counterpart robot to an emotion recognition server which contains an artificial neural network that is learned to recognize emotion information based on image data and voice data; and
receiving an emotion recognition result from the emotion recognition server.

15. A robot configured to perform the operating method of any one of claims 1 to 14.
